# EUROPÄISCHE PATENTSCHRIFT

(11) **EP 0 723 058 B1**
(45) Veröffentlichungstag und Bekanntmachung des Hinweises auf die Patenterteilung: **19.12.2001**
(21) Anmeldenummer: 95117625.4
(22) Anmeldetag: 09.11.1995
(51) Int. Cl.: E05C 17/30, E05F 5/00, F16B 7/14

(54) **Bremse, insbesondere für einen Oberlichtflügel**
Brake, in particular for a skylight wing
Frein, en particulier pour un vantail de lucarne

(30) Priorität: 17.01.1995 DE 29500643 U
(43) Veröffentlichungstag der Anmeldung: 24.07.1996
(73) Patentinhaber: Gretsch-Unitas GmbH Baubeschläge, D-71254 Ditzingen (DE)
(72) Erfinder: Renz, Walter Dipl.-Ing. (FH), D-71254 Ditzingen (DE); Pöhler, Manfred, D-70327 Stuttgart (DE); Engler, Hans, D-70825 Korntal-Münchingen (DE); Dieners, Udo, D-74354 Besigheim/Ottmarsheim (DE); Gründler, Daniel Dipl. Ing., D-71229 Leonberg (DE)
(74) Vertreter: Dreiss, Fuhlendorf, Steimle & Becker

(56) Entgegenhaltungen:
- DE-A- 2 224 877
- GB-A- 102 252
- GB-A- 123 708
- GB-A- 761 314
- US-A- 1 365 829
- US-A- 2 049 726
- US-A- 4 042 266

## Beschreibung

Die Erfindung bezieht sich auf eine Bremsvorrichtung, mit einer Bremse und zwei Teleskopglieder, insbesondere für ein um eine untere horizontale Achse kippbares flächiges Element, z.B. für einen Oberlichtflügel, gemäß den Merkmalen des Oberbegriffes des Anspruchs 1.

Wenn das flächige Element bspw. eine Klappe eines Möbelstücks ist und der oder die Teleskoparme dabei am Möbelstück einerseits sowie an der Klappe andererseits angelenkt ist bzw. sind, so läßt sich diese Klappe gebremst öffnen. Man vermeidet nach dem Aufschließen und Loslassen ein unkontrolliertes vollständiges Öffnen der Klappe, was mit entsprechenden Beschädigungen am Möbelstück verbunden sein kann. Möbelklappen sind üblicherweise verhältnismäßig leichte, flächige Elemente, weswegen in der Regel ein Teleskoparm ausreicht und außerdem die Bremskraft relativ klein bemessen sein kann.

Durch das DE-GM 71 47 342 ist ein Klappenhalter mit Reibungsbremse für schrankartige Möbelstücke bekannt geworden, bei welchem die Bremse zwei halbschalenförmige Bremsbacken aufweist und das Spreizglied ein Konus ist. Die Formgebung ist so gewählt, daß das Anliegen über eine umlaufende Linie erfolgt. Für diesen speziellen Zweck, d.h. für das Abstützen eines kippbaren flächigen Elements geringer Größe reicht diese Ausbildung der Bremse vollkommen aus. Wenn jedoch das flächige Element bspw. 70 oder 80 kg wiegt, was bei einem doppeltverglasten Kippflügel leicht der Fall sein kann, so bewirkt die umlaufende Linie im Bremsbereich, aufgrund der notwendigen örtlichen Pressung, insbesondere bei schnellem Kippen, eine örtliche Erhitzung, woraus ein Fließen des Kunststoffs und somit eine Beschädigung oder gar Zerstörung der Bremsbacken resultieren kann.

Aus der den nächstkommenden Stand der Technik bildenden US-A-1,365,829 ist ein Bremsteleskop bekannt geworden, welches zwei Teleskopelemente aufweist, die sich hülsenartig übergreifen. Am freien Ende des inneren Teleskopelements befinden sich Bremskeile, die über eine Keilfläche aneinander anliegen und dadurch radial verstellbar sind. Das äußere Teleskopelement ist als Rundhülse ausgebildet, weshalb auch die Bremskeile als Rundkeile ausgebildet sind. Ähnliche Ausgestaltungen sind aus der GB-A-102,252 und der GB-A-761,314 bekannt.

Die DE-A-40 16 757 offenbart einen Beschlag für einen um eine horizontale Achse schwenkbaren Flügel eines Fensters mit einer Öffnerschere und einer Falzschere. Die Falzschere ist mit einer Teleskopbremse versehen, welche ineinanderschiebbare Teleskopglieder aufweist. Das eine Teleskopglied ist mit Bremselementen versehen, die an die Innenflächen der Schmalseiten des rechteckförmigen anderen Teleskopgliedes anliegen. Zum Aufbringen der erforderlichen Bremskräfte sich sehr hohe Anpresskräfte erforderlich, die bis an die Belastungsgrenzen der Teleskopglieder gehen.

Die Aufgabe der Erfindung besteht infolgedessen darin, eine Bremsvorrichtung der eingangs genannten Art so weiterzubilden, daß sie in der Lage ist auch ein hohes Gewicht des flächigen Elements sicher und dauerhaft abzubremsen. Hierbei ist natürlich zu beachten, daß es sich bei Bremsbacken, wie bei jeder Bremse, um ein Verschleißteil handelt, das von Zeit zu Zeit ausgewechselt werden muß. Der Begriff dauerhaft ist also so zu verstehen, daß bspw. ein schwerer Kippflügel über einen langen Zeitraum hinweg immer wieder gekippt werden kann, ohne daß es dabei durch Überlastung zu einer Beschädigung der Bremse kommt.

Ein Oberlichtflügel wird in aller Regel von Hand oder auch über einen geeigneten Antrieb von der Schließstellung in eine Kippstellung überführt, in der er so lange wie gewünscht, verbleibt. Es gibt aber darüber hinaus auch noch eine Putzstellung, welche man dadurch erreicht, indem man den bereits gekippten Flügel noch weiter öffnet. Auf diese Weise wird dann die Außenfläche vom Rauminneren her zugänglich, so daß man sie z.B. säubern kann. Die Putzstellung ist dabei bekanntermaßen durch das vollständige Ausziehen des oder der Teleskoparme begrenzt. Die Bremse muß so ausgelegt sein, daß bei normalem Öffnen des Oberlichts nur die Kippstellung erreicht wird und man durch erhöhten Krafteinsatz den Flügel von der Kippstellung in die Putzstellung weiterverschwenkt. Die Bremse muß also einerseits den Flügel in der Kippstellung sicher halten, andererseits aber das Weiterverschwenken in die Putzstellung zulassen.

Die Aufgabe wird erfindungsgemäß durch eine Bremsvorrichtung gelöst, die die Merkmale des Anspruchs 1 aufweist.

Bei einer Bremse mit zwei Bremsbacken bzw. einem Bremsbackenpaar und einem keilförmigen Spreizglied, welches beim Betätigen der Bremse, also beim Kippen des Flügels, in den Spaltraum zwischen die beiden Bremsbacken hineingezogen oder geschoben wird, legt sich jede der beiden Keilflächen an einer Keilgegenfläche des zugeordneten Bremsbackens an. Die beiden Keilflächen sind dabei wirksame Keilflächen im oben genannten Sinne und sie sind üblicherweise zur Längsmittelebene des Keils gleich stark geneigt. Dies ermöglicht es, gleich ausgebildete Bremsbacken zu verwenden.

Durch die Verwendung flacher Keile anstelle eines konischen, sich verjüngenden Spreizglieds und durch die Zusammenwirkung jedes Keils mit einer Keilgegenfläche gleicher Neigung erreicht man in jeder Bremslage bzw. Bremsstellung eine gute flächige Anlage und demzufolge geringe Flächenpressung. Dies führt dann in der angestrebten Weise zu einer geringen örtlichen Belastung, so daß selbst bei Verwendung von Kunststoffmaterial für zumindest die Keilfläche oder die Keilgegenfläche keine linienförmige Berührung stattfindet und damit eine örtliche Überbeanspruchung oder ein Fließen des Kunststoffs verhindert wird.

Erfindungsgemäß ist der Keil zu einer Längsmittelebene symmetrisch ausgebildet, und er weist zwei wirksame Keilflächen auf,denen je ein Bremsbacken zugeordnet ist, so daß die vorstehend bereits angesprochene Erhöhung der Sicherheit gegen Schädigung und Fließen erreicht wird.

Das zweite Teleskopglied ist zumindest im Bereich der Bremse als Flachstab ausgebildet, wobei die Dicke des dicken Keilendes die Dicke des Flachstabs in diesem Bereich übertrifft. Das untere, dünnere Keilende ist bevorzugterweise dünner als die Breite des Flachstabs im Bereich des geschlossenen Rahmens.

Eine weitere Ausgestaltung der Erfindung ist dadurch gekennzeichnet, daß das erste, rohrförmige Teleskopglied schwenkbar am oberen Bereich des Flügels und das zweite stabförmige, bei geschlossenem Flügel von unten her in das erste eingreifende Teleskopglied am festen Rahmen angelenkt ist. Wenn nachstehend die Bezeichnung unten oder oben verwendet wird, so bezieht sich das immer jeweils auf ein in der Schließlage etwa vertikales flächiges Element bzw. einen Oberlichtflügel. Der Einfachheit halber wird nachstehend lediglich nur von einem Oberlichtflügel gesprochen, ohne daß dies einschränkend verstanden werden soll. Selbstverständlich kann dieser Oberlichtflügel in seiner Schließlage zu einer vertikalen Ebene geneigt angeordnet sein, wenn er sich an einer geneigten Wand, einem Dach oder dgl. befindet. Dem besseren Verständnis wegen wird aber nachstehend auch immer davon ausgegangen, daß der Flügel in der Schließlage eine vertikale Stellung einnimmt, wobei auch dies nicht einschränkend verstanden werden soll.

Wenn also gemäß Anspruch 3 das untere Ende des oder der Teleskoparme oberhalb der Kippachse des Oberlichtflügels am festen Rahmen angelenkt ist, so führt ein Kippöffnen des Flügels automatisch zu einem Auszug des oder der Teleskoparme. Gleichzeitig drehen sich die beiden Enden der Teleskoparme gegenüber den Lagerelementen am Flügel bzw. am festen Rahmen. Die Teleskoparme nehmen demzufolge eine Schräglage sowohl gegenüber der Ebene des Flügels als auch derjenigen des festen Rahmens ein.

Gemäß einer besonders bevorzugten Ausführungsform der Erfindung ist das bremsseitige Ende des zweiten Teleskopglieds als C-förmiger Haken oder als geschlossener Rahmen ausgebildet, in dem sich alle Bremsbacken, das Spreizglied und die Belastungsfeder befinden. Bei hohen Flügelgewichten wird einem geschlossenen Rahmen der Vorzug gegenüber einem C-förmigen Haken gegeben, weil die Belastungsfähigkeit des geschlossenen Rahmens weit größer ist als die des Hakens. Die Größe des Durchbruchs des Rahmens richtet sich nach der Größe der aufzunehmenden Elemente der Bremse. Außerdem muß Sorge dafür getragen werden, daß alle notwendigen Bewegungen beim Bremsen und Lösen der Bremse ohne Behinderungen ausgeführt werden können.

Erfindungsgemäß ist das untere Ende der vorzugsweise als Schraubendruckfeder ausgebildeten Belastungsfeder am unteren Rahmenende abgestützt, während ihr oberes Ende gegen die darüber befindlichen Bremsbacken drückt. Soweit erforderlich, können jeweils noch formlich geeignete Stützglieder zwischengeschaltet sein.

Zur Vereinfachung der Montage und auch zur Sicherung der Schraubendruckfeder gegen seitliches Ausweichen wird zweckmäßigerweise jedes Federende in Querrichtung abgestützt.

Eine besonders bevorzugte Variante der Erfindung ergibt sich aus Anspruch 8. Demgemäß wird das Spreizelement gewissermaßen durch Einhängen mit dem oberen Ende des zweiten Teleskopglieds gekuppelt. Seine beiden Verankerungsansätze greifen dabei in jeweils eine ihrer Form und Größe angepaßte Schlitzverbreiterung am oberen Ende des Rahmendurchbruchs ein, die ein Verschieben in Längsrichtung des zweiten Teleskopglieds verhindern, das Quereinschieben und ggf. Quer-Herausnehmen des Spreizelements aber gestatten. Hieraus resultiert auch eine gewisse Schwenkbeweglichkeit des Spreizelements um sein oberes Ende. Diese entfällt selbstverständlich, wenn dieses Spreizelement anliegend zwischen zwei Bremsbacken greift, die mit ihren Außenflächen direkt oder indirekt innen am rohrförmigen ersten Teleskopglied abgestützt sind.

Eine bevorzugte Ausführungsform der Erfindung ergibt sich aus den Merkmalen des Anspruchs 10. Ihr Vorteil liegt darin, daß man bei ein und derselben Bremse Spreizglieder gleicher Länge aber unterschiedlicher Stützleistenhöhe verwenden kann, so daß sich bei gleichem Keilwinkel unterschiedliche Aufspreizungen und infolgedessen unterschiedliche Bremskräfte ergeben. Diese Bremse läßt sich leicht umstellen, wenn sich herausstellt, daß ein Spreizglied bspw. eine zu schwache oder zu starke Bremswirkung erzeugt.

Eine andere Variante der Erfindung ergibt sich aus den Merkmalen des Anspruchs 11. Auch sie ermöglicht es unter Beibehaltung einer Grundkonstruktion verschieden starke Bremswirkungen zu erzielen, indem man das Spreizglied und/oder das Stützglied gegen jeweils ein anderes geeignetes austauscht. Besonders vorteilhaft ist es in diesem Zusammenhang, wenn das Stützglied ein codiertes Element darstellt, welches zur Veränderung der Bremswirkung nicht ausgewechselt, sondern gemäß Anspruch 12 einfach umgesetzt wird. Wenn alle Umsetzungsmöglichkeiten erschöpft sind, kann man es selbstverständlich auch gegen ein anderes austauschen.

Eine weitere Ausführungsform ergibt sich aus Anspruch 13. Auf diese sowie auf die beiden vorerwähnten und weitere Varianten der Erfindung wird nachstehend im Rahmen der Zeichnungsbeschreibung noch näher eingegangen.

Die Bremsbacken sind bevorzugterweise aus einem Aramid, z.B. Kevlar hergestellt. Dieses Kunststoffmaterial ist hoch belastbar und langlebig. Es ist insbesondere vorgesehen, Kevlar 70K 20N C10 zu verwenden. Die in den Kevlarkunststoff eingelagerten Kevlarfasern verhindern ein Fließen des Kunststoffs und sie vermeiden auch eine Beschädigung der Bremsgegenfläche, die sich bspw. bei Verwendung von glasfaserverstärktem Kunststoff ergibt. In Verbindung mit diesem Material wird ein Keilwinkel von bspw. etwa 11° vorgeschlagen. Desweiteren besteht in sehr vorteilhafter Weise gemäß Anspruch 18 das erste Teleskopglied zumindest im wesentlichen aus einem Vierkantrohr aus Aluminium oder dgl. Leichtmetall, wobei das Rohr zumindest innen technisch eloxiert ist. Diese Eloxalschicht bildet zusammen mit den Kevlar-Bremsbacken eine sehr wirkungsvolle Kombination. Besonders geeignet ist AlMgSi05F19. Bei den üblichen Flügelgewichten empfiehlt sich eine Wanddicke von etwa 1,5 mm und ein Innenmaß von 7 x 14,5 mm. Dabei ist ein Flügelgewicht von etwa 85 kg zugrunde gelegt.

Eine weitere Ausgestaltung der Erfindung sieht vor, daß das Vierkantrohr über etwa den Teilbereich aufgeweitet ist, der von den Bremsbacken beim Öffnen bis in eine definierte Kippstellung durchlaufen wird. Die Bremswirkung ist in diesem ersten Teilbereich gering und sie kann im besonderen Fall auch den Wert Null annehmen. Dies bedeutet, daß der Flügel von der Schließlage bei geringer oder noch nicht vorhandener Bremswirkung in die Kippstellung überführt werden kann. Der ungebremste oder schwach gebremste Öffnungsweg beträgt dabei z.B. etwa 300 mm. Weil nunmehr die starke Bremsung einsetzt wird die Kipp-Öffnungsbewegung nach Durchlaufen dieses ersten Öffnungswegs selbsttätig elastisch abgebremst und dann in dieser Stellung gehalten. Durch Aufbringen einer entsprechend großen Hand- oder Antriebskraft läßt sich der Flügel von der Kipp- in die Reinigungsstellung überführen, wobei es keiner vorherigen Entriegelung bedarf (DE-AS 17 84 838). Auf diese Weise verhindert man, daß bei Handöffnung des Flügels dieser schlagartig bis in die Putzstellung nach unten fällt, was zu einer Gefährdung der Bedienungsperson und auch zu Beschädigung des Fensters führen kann. Soll der Flügel anschließend in die Kippstellung zurückgeführt werden, so muß wieder die entsprechend große Betätigungskraft aufgebracht werden. Eine stoßweise oder ruckartige Öffnungsbewegung bewirkt selbsttätig eine Verstärkung der Bremswirkung um ca. 30 bis 50 %.

Der Ordnung halber wird noch ergänzend mitgeteilt, daß die Federkonstante beim geschilderten Ausführungsbeispiel bei 6 N/mm liegt.

Wenn in der vorstehend geschilderten Weise das Vierkantrohr in einem Teilbereich aufgeweitet wird, der ausgehend von der Schließstellung von den Bremsbacken zunächst durchlaufen wird, so erreicht man nicht nur eine genaue Definition der Kippstellung sondern mit einfachen Mitteln auch eine starke bzw. verstärkte Bremswirkung beim Weiterkippen des Flügels in die Putzstellung.

Die Ansprüche 20 bis 24 beschreiben eine besonders vorteilhafte, mit geringem Aufwand herzustellende wirksame Sicherung der Ankupplung des oberen Endes des Teleskoparms an seinem Lagerteil, die schnell ohne Werkzeuge gelöst und genauso einfach bei der Montage des Flügels hergestellt werden kann. Sie ist für sich allein bei jedem Beschlag anwendbar, bei dem ein Schwenkarm schnell an- und abgekuppelt werden soll.

Anspruch 25 beinhaltet eine sehr vorteilhafte Lösung für eine Begrenzung der Ausziehlänge der Teleskoparme und damit auch der maximalen Kippstellung des Flügels. Der Herstellungsaufwand ist besonders gering, wenn man den Innen- und den Außenanschlag durch Ausprägungen bzw. Einprägungen bildet, worauf in der Beschreibung eines Ausführungsbeispiels noch näher eingegangen wird.

Weil die Rahmen auch heute vielfach noch aus Holz hergestellt werden, ist die weitere Ausgestaltung gemäß Anspruch 26 sehr vorteilhaft, welche aufgrund der schrägen Einbringung der Befestigungsschrauben ein Aufspalten des Holzes in diesem Bereich wirkungsvoll verhindert.

Weitere vorteilhafte Ausbildungen, sowie hieraus resultierende Wirkungsweisen und Vorteile ergeben sich aus der Beschreibung verschiedener Ausführungsbeispiele und den Unteransprüchen.

Die Erfindung wird nachstehend anhand der Zeichnungen näher erläutert. Die Zeichnung zeigt verschiedene Ausführungsbeispiel der Erfindung. Hierbei stellen dar:
- Figur 1: schematisch eine Seitenansicht eines kippbar in einem festen Rahmen gelagerten Flügels mit Darstellungen der Schließlage, der Kippstellung und der Putzstellung;
- Figur 2: teilweise geschnitten eine Seitenansicht einer ersten Ausführungsform des Teleskoparms der Figur 1 in etwas vergrößertem Maßstab;
- Figur 3: eine starke Vergrößerung des Ausschnitts III der Figur 2;
- Figur 4: eine perspektivische Darstellung der Bremse der ersten Ausführungsform;
- Figur 5: ebenfalls perspektivisch den linken Bremsbacken der Figur 4;
- Figuren 6 bis 8: Darstellungen entsprechend der Figur 3 mit drei unterschiedlich dimensionierten Spreizgliedern;
- Figur 9: eine Draufsicht auf eine zweite Variante der Erfindung im Bereich der Bremse;
- Figur 10: eine zugehörige Seitenansicht in einer Darstellung analog Figur 2;
- Figuren 11 bis 16: Darstellungen dreier weiterer Ausführungsformen der Erfindung analog zu den Figuren 9 und 10;
- Figur 17: perpektivisch, teilweise geschnitten und in starker Vergrößerung eine Darstellung des oberen gesicherten Lagers des oberen Teleskoparmendes.

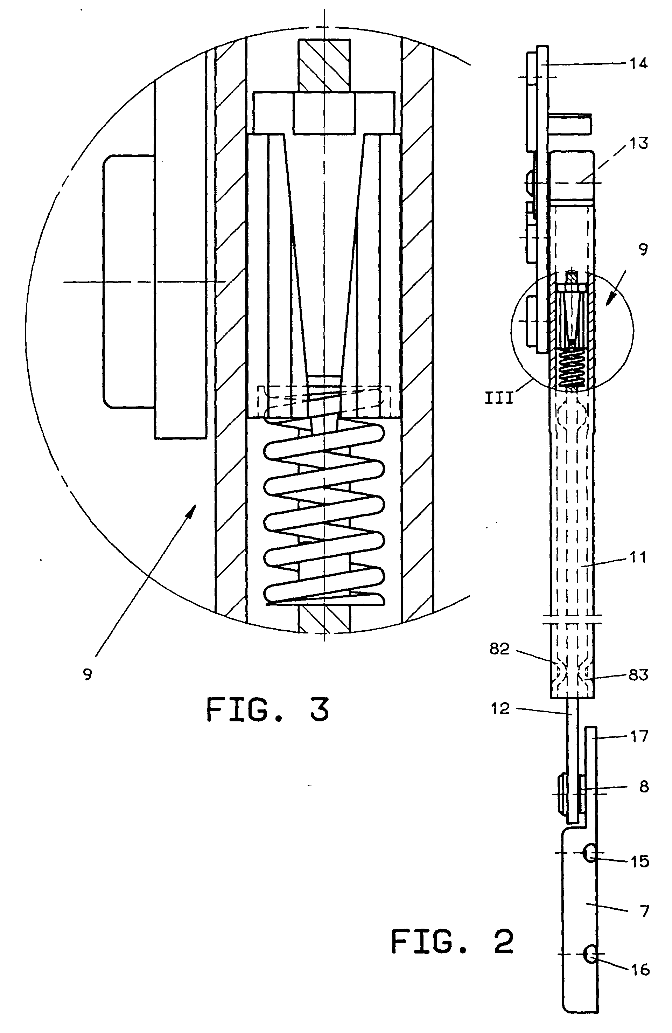

In einem festen Rahmen 1 ist ein Flügel 2 um eine untere horizontale Achse 3 im Sinne des Pfeils 4 öffenbar und in Gegenrichtung schließbar. Bei den Ausführungsbeispielen ist der Flügel mittels zweier, den beiden Vertikalholmen der beiden Rahmen zugeordneter Teleskoparme 5 gehalten. Das obere Ende jedes Teleskoparms ist am oberen Flügelende 6 angelenkt. Sein unteres Ende ist in einigem Abstand oberhalb der Horizontalachse 3 am festen Rahmen angelenkt. Dort befindet sich ein im Querschnitt vorzugsweise U-förmiges Lagerstück 7 (Figur 2). Die Lagerachse ist mit 8 bezeichnet.

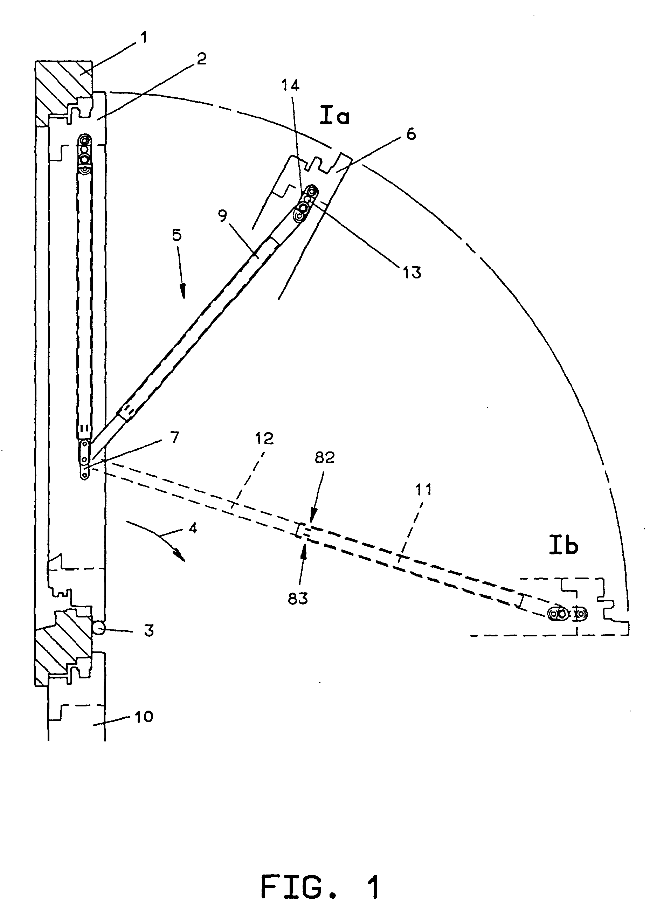

Ausgehend von der in Figur 1 vollständig gezeichneten geschlossenen Stellung des Flügels 2 wird letzterer zunächst in die mit Ia bezeichnete Kippstellung überführt. Es handelt sich insoweit um eine stabile Stellung, die der Flügel 2 aufgrund einer an jedem Teleskoparm 5 eingebauten Bremse 9 einnimmt. Gegen den Widerstand dieser Bremse 9 kann der Teleskoparm 5 und damit auch der Flügel 2 in die sogenannte Putzstellung überführt werden, die in Figur 1 mit Ib bezeichnet ist. Dabei ist dann die Außenfläche des Flügels 2 vom Rauminneren her zugänglich, wenn man unterstellt, daß der Flügel 2 in Figur 1 ins Rauminnere verschwenkt wird. Aufgrund des Höhenabstands, den das Lagerstück 7 von der unteren horizontalen Achse 3 hat, wird beim Kippen des Flügels 2 jeder Teleskoparm 5 auseinandergezogen, wobei in der Stellung Ib seine maximale Ausziehlänge erreicht ist. Auf diese Weise sichert man die Putzstellung Ib und verhindert ein weiteres Herabschwenken des Flügels 2.

Beim vorstehend angesprochenen Flügel 2 handelt es sich um einen sogenannten Oberlichtflügel, der meist vom Boden aus nicht erreichbar ist, sondern mittels eines geeigneten Gestänges oder Antriebs geöffnet oder geschlossen werden muß. Anstelle eines Flügels 2 kann das flächige Element auch ohne weiteres eine Schreibklappe, ein Kipptor oder dgl. sein. Üblicherweise verläuft die Ebene des festen Rahmens 1 gemäß Figur 1 in vertikaler Richtung, jedoch schließt dies nicht aus, daß in der Schließlage der feste Rahmen 1 und der Flügel 2 gegenüber einer Vertikalebene etwas geneigt sind. In Figur 1 ist außerdem noch angedeutet, daß sich unterhalb des kippbaren Flügels 2 noch ein weiterer Flügel 10 befinden kann. Es kann dies sowohl ein festes Feld sein als auch ein in beliebiger, bekannter Weise öffenbarer weiterer Flügel 10. Nachstehend wird davon ausgegangen, daß in der Schließlage der feste Rahmen 1 und der Flügel 2 eine Vertikalstellung einnehmen und dabei auch die Längsachsen der vorzugsweise Teleskoparme 5 in vertikaler Richtung verlaufen. Die Kippstellung ist bspw. nach einer etwa 45° Verschwenkung des Teleskoparms 5 erreicht und die Putzstellung nach etwa 120 oder 130°. Im letzteren Falle erstreckt sich dann die Ebene des Flügels 2 gemäß Figur 1 etwa in horizontaler Richtung oder leicht geneigt nach unten. Wenn die Verhältnisse wie vorbeschrieben sind, so werden die beiden Teleskoparme 5 jeweils in einer Vertikalebene verschwenkt.

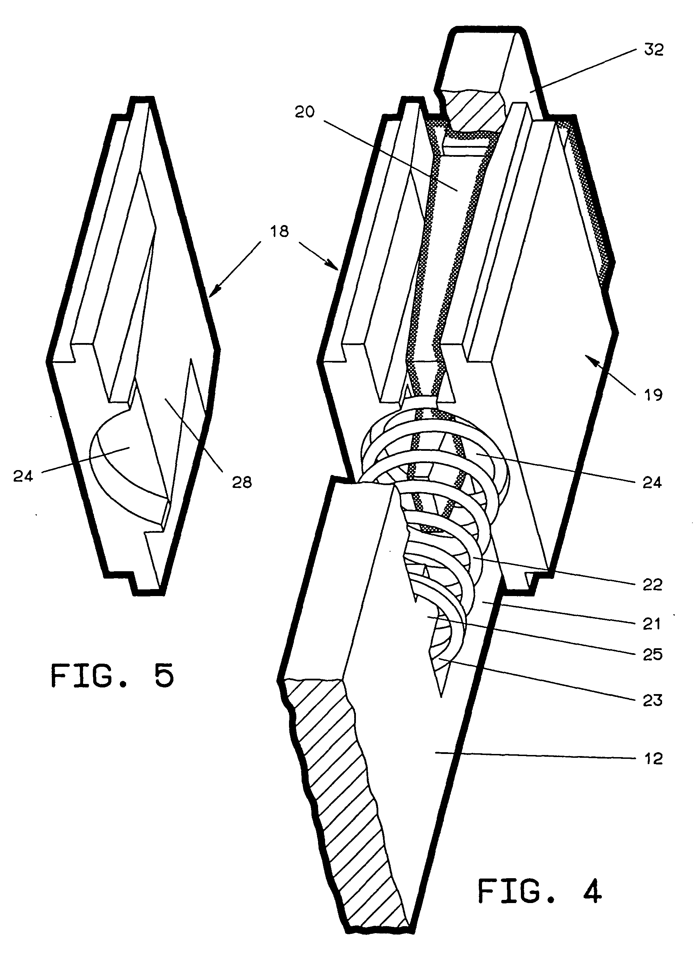

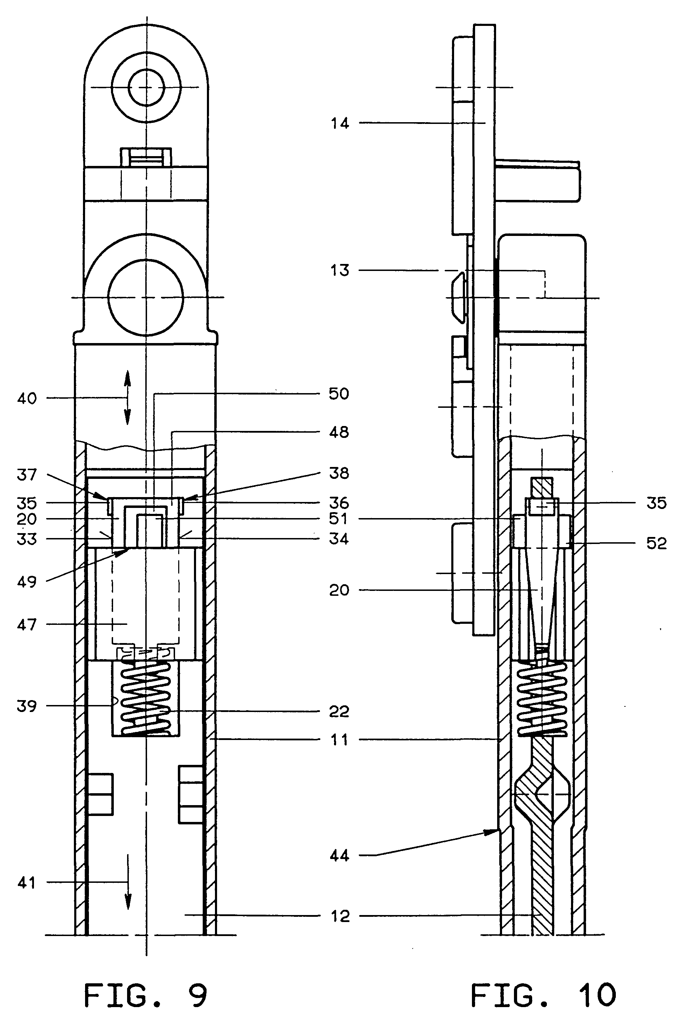

Gemäß bspw. Figur 2 besteht jeder Teleskoparm 5 bei allen Ausführungsbeispielen aus einem rohrförmigen ersten Teleskopglied 11 und einem stabförmigen zweiten Teleskopglied 12. Den Figuren 9 und 10 entnimmt man bspw., daß es sich dabei um ein Vierkantrohr mit rechteckigem Querschnitt handelt. Das untere Ende des aus einem Flachstab hergestellten zweiten Teleskopglieds 12 (Figur 4) ist über eine Lagerachse 8 mit einem innen am festen Vertikalholm angebrachten Lagerstück 7 verschwenkbar gekuppelt (Figur 2), wobei sich der Lagerbolzen bspw. am Lagerstück 7 befinden kann. Die Lagerverbindung ist in üblicher Weise gegen unbeabsichtigtes axiales Lösen zu sichern. Das Lagerstück 7 weist in seinem Bereich unterhalb der Lagerachse 8 einen U-förmigen Querschnitt auf und an jeder Ecke sind zwei in Längsrichtung versetzte Schrägbohrungen 15 und 16 angebracht, die sowohl gegenüber dem U-Mittelsteg als auch dem jeweils zugehörigen Seitensteg unter etwa 45° verlaufen, so daß die Schrauben schräg zur Boden- und Lagerplatte 17 des Lagerstücks 7 in das Rahmenholz einschraubbar sind. Dies wirkt Spaltungstendenzen im Holz wirkungsvoll entgegen.

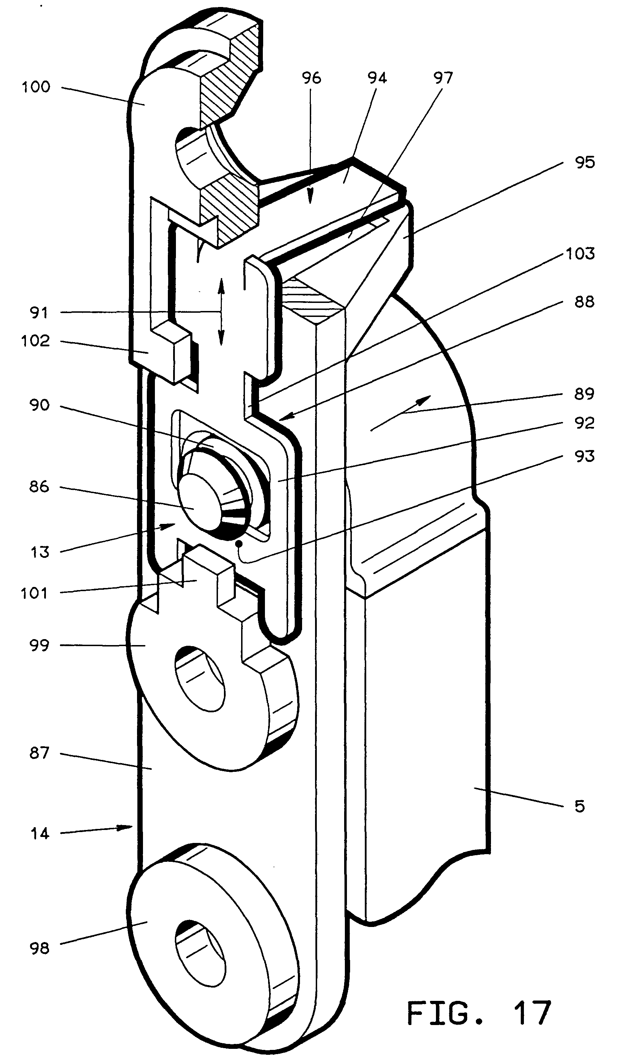

Das obere Ende des ersten rohrförmigen Teleskopglieds 11 ist mittels eines Lagerzapfens 13 am oberen Ende des Flügels 2 außen im Bereich des oberen Querholms verschwenkbar gelagert, worauf später im Zusammenhang mit Figur 17 noch näher eingegangen wird.

Bei allen Ausführungsbeispielen weist die Bremse 9 zwei identische Bremsbacken 18 und 19 auf, zwischen die ein sich nach unten hin verjüngendes keilförmiges Spreizglied 20 greift. Dessen Keilwinkel beträgt vorzugsweise etwa 11°. Das obere Ende des zweiten Teleskopglieds 12 ist gemäß Figur 4 mit einem Durchbruch 39 versehen bzw. als Rahmen 21 ausgebildet, welcher das Spreizglied 20, die Bremsbacken 18 und 19 sowie eine Belastungsfeder 22 aufnimmt, wobei es sich bevorzugterweise um eine Schraubendruckfeder handelt.

Deren unteres Ende stützt sich bspw. über einen Stützring 22 oder auch unmittelbar am unteren Ende des Rahmens 21 ab, während das obere Federende unter Vorspannung an den unteren Enden der Bremsbacken 18 und 19 anliegt. Zur Zentrierung befindet sich dort eine Zentrieraufnahme 24, die je zur Hälfte von einem Bremsbacken 18, 19 gebildet wird. Das untere Federende übergreift einen Zentrieransatz 25 am unteren Rahmenende, der zweckmäßigerweise einstückig angeformt ist und einen rechteckigen oder quadratischen Querschnitt entsprechender Größe aufweist.

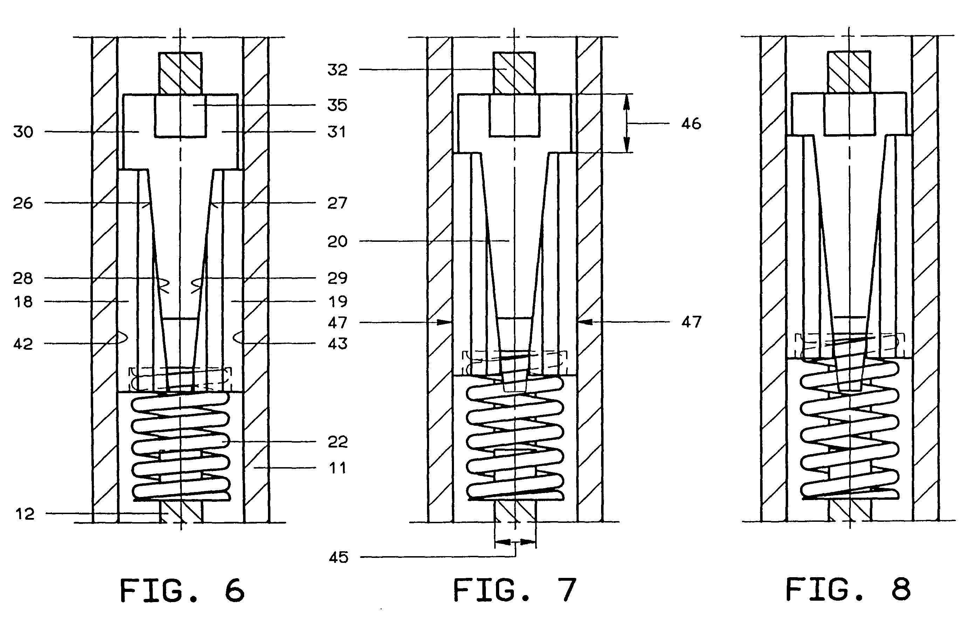

Erfindungsgemäß ist das Spreizglied 20 als Keil ausgebildet, mit zwei gegenüber einer Längsmittelebene durch das zweite Teleskopglied 12 symmetrisch angeordneten wirksamen Keilflächen 26 und 27 (Figur 6). Jede wirkt mit einer Keilgegenfläche 28 bzw. 29 des zugeordneten Bremsbackens 18 bzw. 19 zusammen. Die Winkel sind jeweils gleich gewählt, so daß ein Anliegen auf den gesamten Keil- bzw. Keilgegenflächen erreicht wird. Das Spreizglied 20 kann aus Stahl hergestellt werden. Für die Bremsbacken 18, 19 verwendet man bevorzugterweise Kevlar.

Gemäß den Figuren 6 bis 8 steht über das obere Ende jeder Keilfläche 26, 27 des Spreizglieds 20 eine Stützleiste 30 bzw. 31 in Querrichtung vor. An der Unterseite liegt jeweils das obere Ende des zugeordneten Bremsbackens 18 bzw. 19 an. Dort erfolgt die Übertragung der Druckkraft der Belastungsfeder 22. Andererseits liegt aber das obere Ende des Spreizglieds 20 innen am oberen Quersteg 32 des rahmenartigen Teleskopgliedendes an, so daß der Druckkraft der Belastungsfeder 22 über diesen Quersteg 32 entgegengewirkt werden kann.

Der Figur 9 entnimmt man, daß sich am oberen Ende des Spreizgliedes 20 im Bereich der Stützleisten 30, 31 an jeder der beiden seitlichen, vorzugsweise parallelen Seitenflächen 33, 34 des Spreizglieds 20 ein vorstehender Verankerungsansatz 35 bzw. 36 befindet. Jeder greift in eine entsprechend dimensionierte und förmlich angepaßte Verbreiterung 37, 38 am oberen Ende des Rahmendurchbruchs 39 des zweiten Teleskopglieds 12. Dadurch ist gemäß Figur 9 das Spreizglied 20 im Sinne des Doppelpfeils 40 axial unverschieblich mit dem oberen Ende des zweiten Teleskopglieds 12 gekuppelt. Senkrecht zur Blattebene kann es jedoch gegenüber dem zweiten Teleskopglied 12 verlagert werden. Auf diese Weise ist das An- oder Abmontieren möglich.

Hieraus folgt, daß ein Verschieben des zweiten Teleskopglieds 12 bspw. im Sinne des Pfeils 41 gegenüber dem ersten Teleskopglieds 11 eine Mitnahme des Spreizglieds 20 bewirkt, welches über ein Zusammenwirken von Keilflächen und Gegenkeilflächen die Bremsbacken 18 und 19 mitnimmt. Je tiefer das Spreizglied 20 in den Spaltraum zwischen den beiden Bremsbacken 18, 19 eindringt, um so stärker werden die Bremsbacken 18, 19 nach außen verdrängt und an die Innenfläche 42 bzw. 43 des ersten Teleskopglieds 11 angepreßt. Die Verhältnisse sind jedoch so gewählt, daß beim Übergang von der Schließstellung des Flügels 2 in die Kippstellung Ia (Figur 1) die Bremse 9 noch keine oder zumindest keine nennenswerte Bremswirkung erzeugt. Das Fenster kann also leicht gekippt werden. Weil jedoch gemäß bspw. Figur 10 die lichte Weite des Rohres sich vorzugsweise absatzartig verengt wird, wobei in Figur 10 dieser Übergang bzw. Beginn des engen Bereichs mit 44 bezeichnet ist, kommt es bei einer Verschwenkung des Flügels 2 über die Stellung Ia hinaus zu einem Einlaufen der Bremse 9 bzw. der Bremsbacken 18, 19 in den engeren Rohrbereich. Dies ist mit einer starken und plötzlichen Erhöhung der Bremskraft bzw. einem Einsetzen der Bremskraft verbunden. Zumindest die Überführung des gekippten Flügels 2 in die Stellung Ib erfolgt also stets gegen den Widerstand der Bremskraft der Bremse 9. Dabei zwängt sich dann das Spreizglied 20 stärker in den keilförmigen Spaltraum zwischen den beiden Bremsbacken 18 und 19.

Den Figuren 6 bis 8 kann man entnehmen, daß das obere Keilende bzw. die Dicke des Keils unterhalb der Stützleisten 30 und 31 größer ist als die Dicke 45 des im Querschnitt rechteckigen, stabförmigen zweiten Teleskopglieds 12. Wenn man von gleich langen Spreizgliedern 20 - in Verschieberichtung gemessen - ausgeht, so ist der Keil an seinem oberen Ende um so dicker je geringer die Höhe 46 der Stützleisten 30 und 31 ist. Auf diese Weise läßt sich durch Auswechseln des Keils bzw. allgemeiner gesprochen des Spreizglieds 20 die Bremswirkung leicht verändern. Selbstverständlich kann man auch die Belastungsfeder 22 durch eine mit anderer Kennlinie ersetzen. Es bleibt noch nachzutragen, daß die Bremsfläche des Bremsbackens 18 bzw. 19 mit 47 (Figur 7) bezeichnet ist.

Beim Ausführungsbeispiel der Figuren 9 und 10 ist, anders als bei den Figuren 6 bis 8, das obere Ende des Spreizglieds 20 als Rahmen 48 ausgebildet, der ein beidseits vorstehendes Stützglied 49 aufnimmt. Das Stützglied 49 hat gemäß Figur 9 einen quadratischen, den Rahmen 48 des Spreizglieds 20 ausfüllenden Grundkörper 50, sowie zwei nach entgegengesetzten Seiten quer über die Ebene des Rahmens 48 vorstehende, den oberen Bremsbackenenden zugeordete, zapfenartige Stützelemente 51 und 52, die gemäß Figur 9 sowohl in vertikaler als auch in horizontaler Richtung außermittig am Grundkörper 50 angebracht, vorzugsweise angeformt sind. Es entsteht auf diese Weise ein codiertes Stützelement 49. Durch die Kraft der Belastungsfeder 22 wird jeder Bremsbacken 18, 19 von unten her an die Stützelemente 51, 52 angedrückt. Ausgehend von seiner Montagestellung gemäß Figur 9, kann man das Stützelement 49 nach jeder Richtung um 90° oder 180° drehen und auf diese Weise die Lage der Bremsbacken 18, 19 auf dem Spreizglied 20 ändern, ohne daß hierfür Teile ausgetauscht werden müssen. Somit kann man an Ort und Stelle die Bremswirkung der Bremse 9 vergrößern oder verkleinern, ohne daß es irgendeines Werkzeugs bedarf.

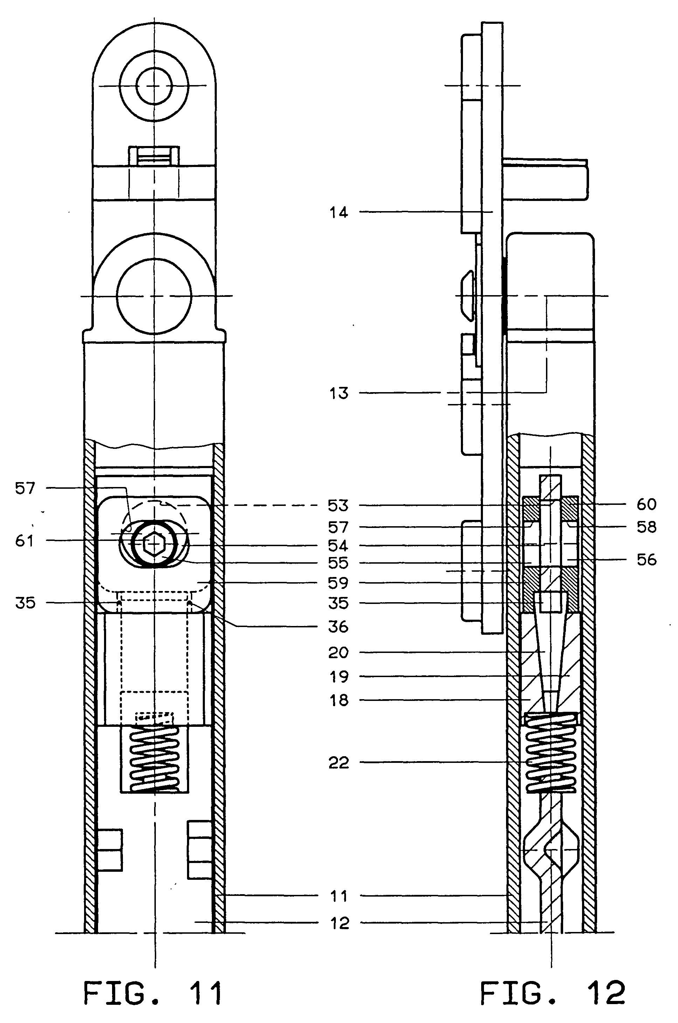

Das Spreizglied 20 des Ausführungsbeispiels der Figuren 11 und 12 ist ebenfalls mit Hilfe von seitlich abstehenden Verankerungsansätzen 35 und 36 in Zug- und Schubrichtung mit dem stabförmigen zweiten Teleskopglied 12 gekuppelt. Eine Bohrung 53 am oberen Ende des zweiten Teleskopglieds 12 nimmt ein kreisscheibenförmiges Drehglied 54 auf. Es ist in nicht näher dargestellter Weise in Drehrichtung einstellbar und feststellbar. Man erreicht dies durch eine entsprechende Passung oder Oberflächenbeschaffenheit von Bohrung 53 und Drehglied 54.

Am Drehglied 54 sind zwei nach entgegengesetzten Richtungen vorstehende, exzentrisch angebrachte Zapfen 55 und 56 angebracht, insbesondere angeformt. Jede greift gemäß Figur 11 in einen Querschlitz eines Backens 59 bzw. 60. Dieser hat eine im wesentlichen rechteckige Form und konstante Dicke. Er füllt den Zwischenraum zwischen dem obersten Ende des zweiten Teleskopglieds 12 und der zugeordneten Innenwandung des Rechteckrohres (erstes Teleskopglied 11) weitgehend aus, so daß beide Backen 59, 60 über die exzentrischen Zapfen 55, 56 sicher gehalten sind. Ihre unteren Enden stützen sich gemäß Figuren 11 und 12 auf dem oberen Ende des jeweils zugeordneten Bremsbackens 18 bzw. 19 ab. Es ist leicht einzusehen, daß man durch eine Drehung des Drehglieds 54 in der Bohrung 53 eine Exzenterverstellung der Zapfen 55, 56 bewirken kann. Auf diese Weise läßt sich die Bremskraft verstellen. Zum Einstellen kann an wenigstens einem der Zapfen ein Innensechskant 61 angebracht werden.

Durch eine Öffnung des Teleskoprohres, z.B. eine Bohrung, ist eine Einstellung der Bremskraft durch Verstellung des Exzenters möglich.

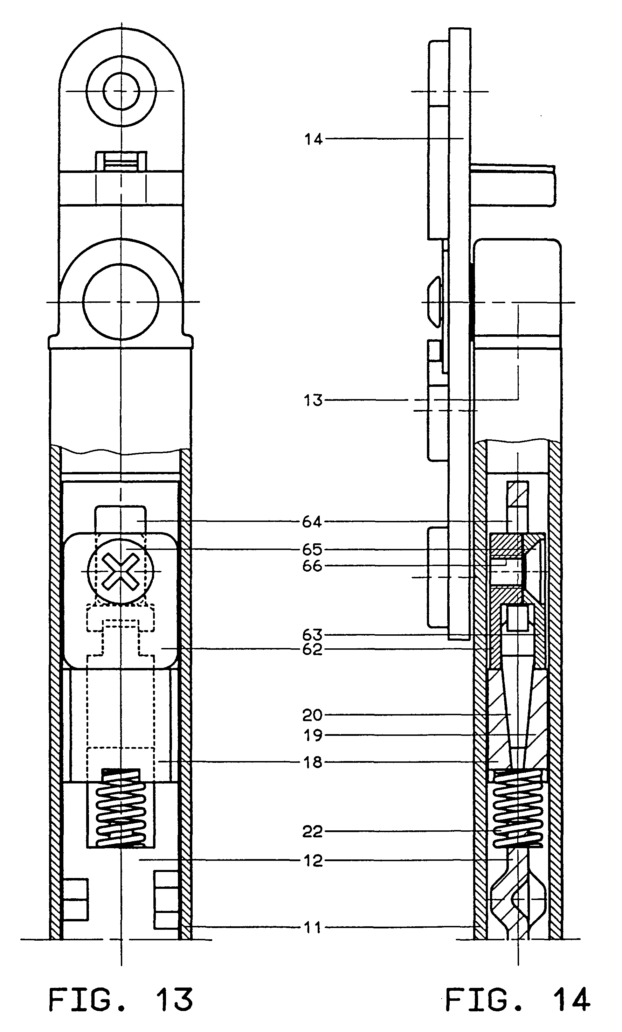

Auch die in den Figuren 13 und 14 dargestellte Ausführungsform weist zwei Backen, nämlich die beiden Klemmbacken 62 und 63 auf. Sie sind dem oberen Ende des zweiten Teleskopglieds 12 zugeordnet. Dieses besitzt an der betreffenden Stelle einen Durchbruch 64, der die oberen, verdickten Enden der beiden Klemmbacken 62, 63 aufnimmt. Dort befindet sich auch eine Schraube 65, die beim Ausführungsbeispiel der Figuren 13 und 14 eine Senkkopfschraube mit Kreuzschlitz ist. Sie wird in das Muttergewinde 66 des Klemmbackens 62 eingeschraubt und bewirkt dadurch die feste Verbindung der beiden Klemmbacken 62, 63 und deren Anklemmen an die Außenfläche im oberen Bereich des Spreizglieds 20.

Wenn man die Schraube 65 löst, wodurch die Klemmbacken 62, 63 vom Spreizglied 20 freikommen, so kann man die beiden Backen 62, 63 innerhalb des Durchbruchs 64 verschieben und auf diese Weise die Bremswirkung der Bremse 9 verändern. Es liegen nämlich die unteren Enden der beiden Klemmbacken 62 und 63 gemäß Figuren 13 und 14 am oberen Ende ihres zugeordneten Bremsbackens 18 bzw. 19 an, so daß diese soweit es das Spreizglied 20 zuläßt der Verschiebung der Bremsbacken 62, 63 beim Einstellen folgen können.

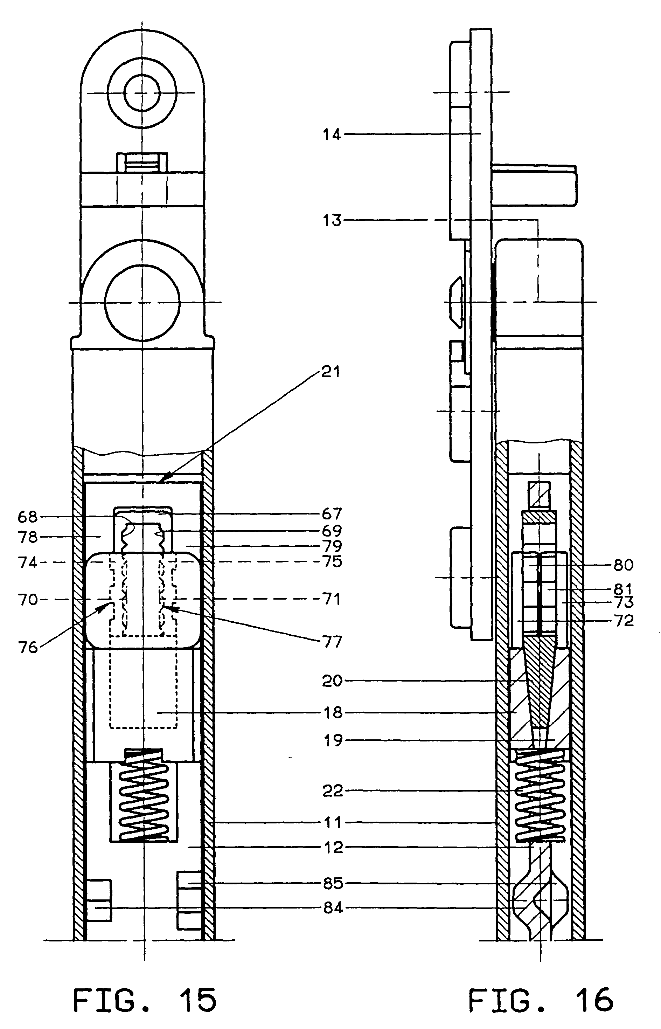

Die Figuren 15 und 16 zeigen eine weitere Variante zum Einstellen der Bremskraft. Sie kann ohne Werkzeug vorgenommen werden.

Das obere Ende 67 des Spreizglieds 20 ist bei diesem Ausführungsbeispiel rahmenartig ausgebildet. An der Innenseite der Rahmen-Längsstege befindet sich je eine erste Verzahnung 68 bzw. 69 in welche eine Gegenverzahnung 70 bzw. 71 zweier Backen 72 und 73 gleichzeitig eingreifen. Dadurch sind die Backen 72, 73 und das Spreizglied 20 in Zug- und Schubrichtung miteinander gekuppelt, jedoch ist durch eine Versetzung um jeweils einen oder mehrere Zähne eine Veränderung der Bremskraft möglich.

Eine zug- und schubfeste Verbindung des Spreizglieds 20 erreicht man über dessen oberes Ende 67, welches an seiner Außenseite je eine zweite Verzahnung 74 bzw. 75 aufweist, die in eine Gegenverzahnung 76 bzw. 77 am zugeordneten Rahmenlängssteg 78 bzw. 79 des Rahmens 21 am oberen Ende des zweiten Teleskopglieds 12 eingreift. Man erhält dort somit eine zweite Variante zur Veränderung der Bremskraft. In der Regel reicht aber ein Versetzen der beiden Backen 72 und 73 aus. Der Figur 16 entnimmt man, daß die beiden Backen 72 und 73 außen am Rahmen 21 des zweiten Teleskopglieds 12 und auch dem rahmenartigen oberen Ende 67 des Spreizglieds 20 anliegen und lediglich die inneren Ansätze 80 bzw. 81 verzahnt sind und in das Rahmeninnere des oberen Endes 67 eingreifen. Es liegt auch wieder jeweils das untere Ende eines Backens 72 bzw. 73 auf dem oberen Ende des zugeordneten Bremsbackens 18 bzw. 19 auf.

Gemäß einer speziellen Ausbildung der Backen 72 und 73 erstrecken sich die Ansätze 80 und 81 nicht über die gesamte Backenhöhe - in Verschieberichtung der Bremse 9 gesehen - vielmehr schließen sie bspw. oben mit der Oberkante der Backen 72, 73 ab, während zur Unterkante der Backen 72, 73 ein Abstand vorzugsweise in der Größenordnung eines halben Zahnabstands verbleibt. Man kann die Backen 72, 73 abziehen, um 180° drehen und wieder aufstecken, um auf diese Weise eine feinfühlige Verstellung in der Größenordnung eines halben Zahnabstands zu erreichen.

Das erste rohrförmige Teleskopglied 11 besitzt an seinem bei geschlossenem Flügel unteren Ende mindestens einen Innenanschlag. Beim Ausführungsbeispiel sind gemäß Figur 1 zwei dort lediglich schematisch angedeutete Einprägungen 82, 83 vorgesehen, wobei es sich auch um Einprägungspaare handeln kann, die durch Stanzen und Drücken gebildet werden können. In vergleichbarer Weise befinden sich am oberen Ende des Teleskopgliedes 12 unterhalb der Bremse 9 Ausprägungen 84 und 85 die formlich den Einprägungen 82 und 83 entsprechen können und diesen so zugeordnet sind, daß man bei völlig herausgezogenem zweiten Teleskopglied 12 (Stellung Ib in Figur 1) ein Auftreffen der Ausprägungen 84, 85 an den Einprägungen 82, 83 und damit einen Ausziehstop für den Teleskoparm 5 erreicht. Lediglich der Ordnung halber wird noch angemerkt, daß die Ausprägungen 84 und 85 in entgegengesetzte Richtungen aus der Ebene des zweiten Teleskopglieds 12 herausgedrückt sind. Jeder Ausprägung 84, 85 sind zwei gegenüberliegende Einprägungen 82, 83 des ersten Teleskopglieds 11 zugeordnet (Figur 2), so daß man auch bei gegenüber der zeichnerischen Darstellung anderer Anordnung der Ausprägungen 84, 85 des zweiten Teleskopglieds 12 stets einen wirkungsvollen Endanschlag erreicht.

Wie sich besonders deutlich aus Figur 17 ergibt, befindet sich am oberen Ende des Teleskoparms 5 der Lagerzapfen 13 der in eine Lagerbohrung des Lagerteils 14 eingreift. Er steht aber mit seinem eine Auflaufschräge bildenden kegelstumpfförmigen Ende 86 über die rahmenseitige Fläche 87 des Lagerteils 14 vor. Die Achse des Lagerzapfens 13 verläuft senkrecht zur Längsachse des Teleskoparms 5. Ein Sicherungselement 88 verhindert ein Herausziehen des Lagerzapfens 13 aus der Lagerbohrung des Teleskoparms 5 im Sinne des Pfeils 89 und damit ein Abkuppeln des betreffenden Teleskoparms 5 vom Flügel 2. Andererseits ermöglicht aber dieses An- oder Abkuppeln die einfache, selbstätige Montage und im Bedarfsfalle auch das Lösen der Teleskoparme 5 vom Flügel 2.

Der Lagerzapfen 13 weist an seinem über die Lagerbohrung vorstehenden freien Ende 86 eine Ringnut 90 auf, in welche das Sicherungselement 88 in seiner wirksamen Stellung von unten her eingreift. Dabei ist das Sicherungselement 88 im Sinne des Doppelpfeils 91 begrenzt verschiebbar und aushebesicher am Lagerteil 14 gelagert. Das schieberartige Sicherungselement 88 besitzt einen rahmenartigen Teilbereich 92, welcher vom freien Ende des Lagerzapfens 13 durchsetzt wird, so daß das konische Ende 86 vorsteht. Die Ringnut 90 befindet sich in der Ebene des Teilbereichs 92. Wenn in Figur 17 das Sicherungselement 88 seine wirksame obere Endstellung einnimmt, so greift der untere Rahmensteg 93 in die Ringnut 90 des Lagerzapfens 13 ein und verhindert dadurch dessen Herausziehen aus der Lagerbohrung. Das Sicherungselement 88 ist in Richtung seiner wirksamen Stellung, also beim Ausführungsbeispiel der Figur 17 nach oben hin federbelastet. Als Belastungsfeder findet eine Blattfeder 94 Verwendung, welche vorzugsweise einstückig mit dem Schieber bzw. Sicherungselement 88 gefertigt ist. Sie stützt sich beim Ausführungsbeispiel der Figur 17 am oberen Ende des Lagerteils 14 ab, welches zu diesem Zwecke an der betreffenden Stelle einen quer vorstehenden, das obere Ende des Teleskoparms 5 übergreifenden Ansatz 95 aufweist.

Die Blattfeder 94 kann mit der Ebene des Sicherungselements 88 einen Winkel von weniger als 90° bspw. von etwa 75° einschließen. Drückt man bspw. mit dem Daumen auf die Oberseite der Blattfeder 94 in Pfeilrichtung 96 so wird der genannte Winkel federelastisch aufgeweitet. Gleichzeitig kann der Schieber 88 entlang seiner Führung nach unten gleiten. Sobald der Durchbruch seines Rahmens 92 zentrisch gegenüber dem konischen Ende 86 des Lagerzapfens 13 ausgerichtet ist, kann der Teleskoparm 5 bzw. sein oberes Ende in Pfeilrichtung 89 vom Lagerteil 14 wegverschwenkt und damit vom Flügel 2 abgekuppelt werden. Es ist ausreichend Elastizität und Spiel für dieses Abkuppeln vorhanden.

Es ist genauso gut möglich, daß die Blattfeder 94 mit der Ebene des Sicherungselements 88 einen rechten Winkel einschließt. In diesem Falle kann man trotzdem durch Niederdrücken in Pfeilrichtung 96 eine Aufspreizung des Winkels erreichen und den rahmenartigen Teilbereich 92 aus der Ringnut 90 herausbewegen, wenn man bspw. an der Oberseite des Ansatzes 95 eine dementsprechende Ausnehmung 97 vorsieht.

Über die rahmenseitige Fläche 87 stehen beim Ausführungsbeispiel drei im wesentlichen ringförmige Ansätze 98, 99 und 100 vor. Sie ermöglichen das sichere Verankern, insbesondere an einer Rahmennut, in welche sie eingreifen können. Durch ihre Bohrung können Befestigungsschrauben hindurchgesteckt werden. Der mittlere Ansatz 99 ist mit einem nach oben weisenden Lappen 101 ausgestattet, welcher als Aushebesicherung für das Sicherungselement 88 dient. Zwei weitere, gegeneinanderweisende Lappen 102, von denen in Figur 17 allerdings nur einer zu sehen ist, ermöglichen zusammen mit Randausnehmungen 103 des Sicherungselements 88 die Montage und Demontage des Sicherungselements 88 vor dem Einstecken des Lagerzapfens 13. Anschließend dienen sie auch als Aushebesicherungen.

Die Bremskraft kann man in der vorstehend geschilderten Weise bereits werksseitig für verschiedene Teleskoparmgrößen und Flügelgewichte fest einstellen. Sollte die Einstellung nicht optimal sein, so kann sie an Ort und Stelle leicht verändert werden.

Wenn die Bremse 9 beim Übergang von der Schließstellung in die Kippstellung Ia noch nicht greift und der Flügel von Hand verschwenkt wird, so wird er in der Kippstellung Ia auch dann gefangen, wenn man ihn nach Lösen der Verriegelung versehentlich oder auch bewußt losläßt. Spätestens ab der Kippstellung Ia des Flügels 2 ist die Bremse 9 wirksam und zwar vorzugsweise mit gleichbleibender Bremskraft, so daß man ihn in jeder Zwischenstellung zwischen der Kippstellung Ia der Putzstellung Ib loslassen kann, ohne daß er weiterkippt. Bei ruckartiger Öffnungsbewegung wird die Bremskraft automatisch erhöht. Die Bremse 9 löst sich ebenfalls automatisch, wenn man den Flügel 2 ausgehend von der Putzstellung Ib zurückschwenkt. Dabei wird dann über das zweite Teleskopglied 12 das Spreizglied 20 aus dem Spaltraum zwischen den beiden Bremsbacken 18 und 19 herausgezogen, so daß sich diese von der Innenwandung des Teleskoprohres 11 lösen können. Zumindest wird aber die Anpreßkraft verringert, bis die Kippstellung Ia erreicht ist.

## Patentansprüche

1. Bremsvorrichtung, mit einer Bremse (9) und zwei Teleskopgliedern (11, 12) insbesondere für ein um eine untere horizontale Achse (3) kippbares flächiges Element, z.B. für einen Oberlichtflügel (2), das an wenigstens einer vertikalen Seitenkante über einen in einer Vertikalebene verschwenkbaren Teleskoparm (5) an einem festen Rahmen (1), Gehäuse oder dgl. oberhalb der Kippachse (3) abgestützt ist, wobei die Bremse (9) zwischen die beiden Teleskopglieder (11, 12) geschaltet ist und die Bremse (9) im wesentlichen aus mindestens zwei im ersten rohrförmig ausgebildeten Teleskopglied (11) verschiebbaren, innen am Rohr anlegbaren Bremsbacken, insbesondere einem Bremsbackenpaar (18, 19), sowie einem mit den mindestens zwei Bremsbacken zusammenwirkenden bzw. zwischen das Bremsbackenpaar (18, 19) greifenden, mit dem zweiten Teleskopglied (12) gekuppelten, sich gegen dessen Lager (7, 8) hin verjüngenden Spreizglied (20) besteht, wobei das Spreizglied (20) als flacher Keil mit mindestens zwei wirksamen Keilflächen ausgebildet ist und jeder wirksamen Keilfläche (26, 27) eine im wesentlichen gleich geneigte Keilgegenfläche (28, 29) eines Bremsbackens (18, 19) zugeordnet ist, **dadurch gekennzeichnet, daß** der Keil (20) zu einer Längsmittelebene symmetrisch ausgebildet ist und den Keilflächen (26, 27) je ein Bremsbacken (18, 19) zugeordnet ist und das erste Teleskopglied (11) zumindest im Bereich der Bremse (9) als Rechteckrohr ausgebildet ist, und die Bremsbacken (18, 19) mit ihren Bremsflächen an der Breitseitenflächen des Teleskopglieds (11) angreifen.

2. Bremsvorrichtung nach Anspruch 1, **dadurch gekennzeichnet, daß** das erste rohrförmige Teleskopglied (11) an seinem bei geschlossenem Flügel unteren Ende mindestens einen Innenanschlag (82, 83) und das zweite Teleskopglied (12) nahe der Bremse (9) einen damit zusammenwirkenden Außenanschlag (84, 85) aufweist.

3. Bremsvorrichtung nach Anspruch 1 oder 2, **dadurch gekennzeichnet, daß** das erste rohrförmige Teleskopglied schwenkbar (13) am oberen Bereich des Flügels (2) oder dgl. und das zweite, stabförmige, bei geschlossenem Flügel von unten her in das erste eingreifende Teleskopglied (12) am festen Rahmen (1) angelenkt (8) ist.

4. Bremsvorrichtung nach einem der vorhergehenden Ansprüche, **dadurch gekennzeichnet, daß** das bremsseitige Ende des zweiten Teleskopglieds (12) als C-förmiger Haken oder als geschlossener Rahmen (21) ausgebildet ist, in dem sich alle Bremsbacken (18, 19), das Spreizglied (20) und eine Belastungsfeder (22) befinden.

5. Bremsvorrichtung nach Anspruch 4, **dadurch gekennzeichnet, daß** sich die vorzugsweise als Schraubendruckfeder ausgebildete Belastungsfeder (22) mit ihrem unteren Ende am unteren Ende des Rahmens (21) und mit ihrem oberen Ende am unteren Ende aller Bremsbacken (18, 19) abstützt.

6. Bremsvorrichtung nach Anspruch 5, **dadurch gekennzeichnet, daß** das untere Federende auf einen Zentrieransatz (25) am unteren Ende des Rahmens (21) aufgesteckt ist.

7. Bremsvorrichtung nach Anspruch 5 oder 6, **dadurch gekennzeichnet, daß** alle Bremsbacken (18, 19) zusammen eine untere Zentrieraufnahme (24) für das obere Federende bilden.

8. Bremsvorrichtung nach einem der vorhergehenden Ansprüche, **dadurch gekennzeichnet, daß** das Spreizglied (20) zwei nach entgegengesetzten Seiten über seine vorzugsweise parallelen Seitenflächen (33, 34) vorstehende Verankerungsansätze (35, 36) aufweist, die in je eine entsprechend dimensionierte Verbreiterung (37, 38) am oberen Ende des Rahmendurchbruchs (39) des zweiten Teleskopglieds (12) axial unverschieblich eingreifen.

9. Bremsvorrichtung nach einem der vorhergehenden Ansprüche, **dadurch gekennzeichnet, daß** das zweite Teleskopglied (12) an einem winkel- und U-förmigen festrahmenseitigen Lagerstück (7) drehbar gelagert ist (8) das an der wenigstens einen Winkelecke mindestens je zwei Schrägbohrungen (15, 16) für Befestigungselemente aufweist.

10. Bremsvorrichtung nach einem der Ansprüche 6 bis 9, **dadurch gekennzeichnet, daß** über das obere Ende jeder Keilfläche (26, 27) des Spreizglieds (20) eine Stützleiste (30, 31) quer vorsteht, an die bei geschlossenem Flügel (2) oder dgl. das obere Ende des zugeordneten Bremsbackens (18, 19) durch die Belastungsfeder (22) angedrückt ist.

11. Bremsvorrichtung nach einem der Ansprüche 6 bis 9, **dadurch gekennzeichnet, daß** das obere, den oder die Bremsbacken (18, 19) nach oben überragende Ende des Spreizglieds (20) als Rahmen (21) ausgebildet ist, der ein beidseits vorstehendes Stützglied (49) aufnimmt, an welches das obere Ende jedes Bremsbackens (18, 19) durch die Belastungsfeder (22) angepreßt ist.

12. Bremsvorrichtung nach Anspruch 11, **dadurch gekennzeichnet, daß** das Stützglied (49) einen quadratischen, den Rahmen (48) des Spreizglieds (20) ausfüllenden Grundkörper (15) und zwei nach entgegengesetzten Seiten quer über die Rahmenebene vorstehende, den oberen Bremsbackenenden zugeordnete, zapfenartige Stützelemente (51, 52) aufweist, die in vertikaler und horizontaler Richtung außermittig am Grundkörper (50) angebracht, insbesondere angeformt sind.

13. Bremsvorrichtung nach einem der Ansprüche 1 bis 7, **dadurch gekennzeichnet, daß** in einer oberhalb des Spreizglieds (20) angeordneten Bohrung (53) des zweiten Teleskopglieds (12) ein kreisscheibenförmiges Drehglied (54) axial unverschieblich sowie in Drehrichtung einund feststellbar gelagert ist, das zwei nach entgegengesetzten Richtungen vorstehende, exzentrisch angebrachte Zapfen (55, 56) aufweist, die in je einen Querschlitz (57, 58) eines seitlich vorgesetzten Backens (59, 60) eingreifen, an dessen unteres Ende das obere Ende des zugeordneten Bremsbackens (18, 19) durch eine Belastungsfeder (22) angedrückt ist.

14. Bremsvorrichtung nach einem der Ansprüche 1 bis 7, **dadurch gekennzeichnet, daß** am oberen Ende des zweiten Teleskopglieds (12) zwei außen anpreßbare Klemmbacken (62, 63) gehalten sind, die vorzugsweise mittels mindestens einer einen oberhalb des Spreizglieds (20) gelegenen Durchbruch (64) des zweiten Teleskopglieds (11) durchsetzenden Schraube (65) anpreßbar sind und daß die Klemmbacken (62, 63) in Längsrichtung des Durchbruchs (64) bzw. des zweiten Teleskopglieds (12) begrenzt verschieb- und einstellbar sind, wobei an ihr unteres Ende das obere Ende des jeweils zugeordneten Bremsbackens (18, 19) durch eine Belastungsfeder (22) anpreßbar ist.

15. Bremsvorrichtung nach einem der Ansprüche 1 bis 7, **dadurch gekennzeichnet, daß** das obere Ende (67) des Spreizglieds (20) rahmenartig ausgebildet ist und sich an der Innenseite der Rahmen-Längsstege je eine erste Verzahnung (68, 69) befindet, in welche je eine Gegenverzahnung (70, 71) zweier beidseits des Spreizglieds (20) angeordneter Backen (72, 73) eingreift, die durch eine Belastungsfeder (22) an das obere Ende des zugeordneten Bremsbackens (18, 19) angedrückt sind, und daß sich an der Außenseite der Rahmen-Längsstege des oberen Spreizgliedendes je eine zweite Verzahnung (74, 75) befindet, die je in eine Gegenverzahnung (76, 77) des zugeordneten Rahmen-Längsstegs (78, 79) des oberen Endes (21) des zweiten Teleskopglieds (12) eingreift.

16. Bremsvorrichtung nach Anspruch 15, **dadurch gekennzeichnet, daß** sich die Gegenverzahnungen (76, 77) jeweils an einem inneren, die Rahmenöffnung des Spreizglieds (20) eingreifenden Ansatz (80, 81) befinden, dessen eines Ende bis zur Oberkante des Backens (72, 73) reicht und dessen anderes Ende um einen halben Zahnabstand vor der Unterkante des Backens endet.

17. Bremsvorrichtung nach einem der vorhergehenden Ansprüche, **dadurch gekennzeichnet, daß** die Bremsbacken (18, 19) wenigstens abschnittsweise aus Kevlar bestehen.

18. Bremsvorrichtung nach einem der vorhergehenden Ansprüche, **dadurch gekennzeichnet, daß** das erste Teleskopglied (11) zumindest im wesentlichen aus einem Vierkantrohr aus Aluminium, Leichtmetall o.dgl. besteht und das Rohr insbesondere zumindest innen eloxiert ist.

19. Bremsvorrichtung nach einem der vorhergehenden Ansprüche, **dadurch gekennzeichnet, daß** das Vierkantrohr des ersten Teleskopglieds (11) über etwa den Teilbereich aufgeweitet ist, der von den Bremsbacken (18, 19) beim Öffnen bis in eine definierte Kippstellung (Ia) durchlaufen wird.

20. Bremsvorrichtung nach einem der vorhergehenden Ansprüche, **dadurch gekennzeichnet, daß** das obere Ende des ersten Teleskopglieds (11) einen quer zur Längsachse vorstehenden Lagerzapfen (13) aufweist, der in eine Lagerbohrung eines am Flügel (2) oder dgl. befestigten Lagerteils (14) eingreift und mittels eines Sicherungselements (88) gegen Herausziehen (89) gesichert ist.

21. Bremsvorrichtung nach Anspruch 20, **dadurch gekennzeichnet, daß** der Lagerzapfen (13) an seinem über die Lagerbohrung vorstehenden freien Ende (86) eine Ringnut (90) aufweist, in welche das Sicherungselement (88) in seiner wirksamen Lage eingreift, wobei das Sicherungselement (88) an einer Außenfläche (87) des Lagerteils (14) anliegt.

22. Bremsvorrichtungnach Anspruch 21, **dadurch gekennzeichnet, daß** das Sicherungselement (88) ein am Lagerteil (14) aushebesicher gelagerter Schieber mit einem rahmenartigen Teilbereich (92) ist, durch welchen in der Montagestellung das Lagerzapfenende (86) hindurchsteckbar ist und dessen einer, vorzugsweise unterer Quersteg (93) in der Sicherungsstellung in die Ringnut (90) des Lagerzapfens (13) eingreift.

23. Bremsvorrichtung nach Anspruch 22, **dadurch gekennzeichnet, daß** an dem vom rahmenartigen Teilbereich (92) abgewandten Ende des Sicherungselements (88) eine Blattfeder (94) angebracht, insbesondere angeformt ist, die sich mit ihrem freien Ende am Lagerteil (14) abstützt.

24. Bremsvorrichtung nach Anspruch 23, **dadurch gekennzeichnet, daß** die Blattfeder (94) mit der Ebene des Schiebers (92) einen Winkel von weniger als 90°, insbesondere etwa 75°, einschließt und das freie Ende der Blattfeder (94) oben auf dem Lagerteil (14) abgestützt ist.

25. Bremsvorrichtung insbesondere nach einem der vorhergehenden Ansprüche, **dadurch gekennzeichnet, daß** das zweite Teleskopglied (12) an einem winkel- und U-förmigen festrahmenseitigen Lagerstück (7) drehbar gelagert ist (8) das an der wenigstens einen Winkelecke mindestens je zwei Schrägbohrungen (15, 16) für Befestigungselemente aufweist.

## Claims

1. A braking device with a brake (19) and two telescoping members (11, 12), in particular for an element which can be tilted around a lower horizontal shaft (3), for example of a skylight wing (2), and which is supported on a fixed frame (1), housing or the like above the pivot shaft at least on one vertical lateral edge by means of a telescoping arm (5), which is pivotable in a vertical plane, wherein the brake (9) is installed between the two telescoping members (11, 12), and the brake (9) essentially consists of at least two brake shoes, which are displaceable inside the first telescoping member (11) embodied in a tube shape, and can be placed against the inside of the tube, in particular a pair of brake shoes (18, 19), as well as of a spreading member (20), which works together with the at least two brake shoes, or enters between the brake shoe pair (18, 19), is coupled with the second telescoping member (12) and tapers in the direction toward the bearing (7, 8) of the latter, wherein the spreading member (20) is embodied as a flat wedge with at least two effective wedge faces and wherein an essentially correspondingly inclined counter- wedge surface (28, 29) of a brake shoe (18, 19) is assigned to each effective wedge surface (26, 27), **characterized in that** the wedge (20) is designed symmetrically in respect to its longitudinal center plane, and a brake shoe (18, 19) is assigned to each wedge surface (26, 27), and that the first telescoping member (11) is designed as a rectangular tube at least in the area of the brake (9), and that the brake shoes (18, 19) act with their brake surfaces on the surfaces of the broad sides of the telescoping member (11).

2. The braking device in accordance with one of the preceding claims, **characterized in that** the first tube-shaped telescoping member (11) has at least one inner detent (82, 83) on its end which is at the bottom when the wing is closed, and the second telescoping member (12) has an outer detent (84, 85) near the brake (9), which acts together with the former.

3. The braking device in accordance with claim 1 or 2, **characterized in that** the first tube-shaped telescoping member is pivotably (13) hinged in the upper area of the wing (2) or the like, and the second rod-shaped telescoping member (12) which engages the first one from below when the wing is closed, is hinged (8) on the fixed frame (1).

4. The braking device in accordance with one of the preceding claims, **characterized in that** the end of the second telescoping member (12) facing the brake is embodied as a C-shaped hook or as a closed frame (21), in which all brake shoes (18, 19), the spreading member (20) and a loading spring (22) are located.

5. The braking device in accordance with claim 4, **characterized in that** the loading spring (22), which is preferably embodied as a helical compression spring, is supported with its lower end at the lower end of the frame (21), and with its upper end at the lower end of all brake shoes (18, 19).

6. The braking device in accordance with claim 5, **characterized in that** the lower spring end has been placed on a centering shoulder (25) on the lower end of the frame (25).

7. The braking device in accordance with claim 5 or 6, **characterized in that** all brake shoes (18, 19) together constitute a lower centering receptacle (24) for the upper spring end.

8. The braking device in accordance with one of the preceding claims, **characterized in that** the spreading member (20) has two anchoring shoulders (35, 36), which protrude at opposite sides past its preferably parallel lateral faces (33, 34), each of which engages a correspondingly dimensioned widening (37, 38) at the upper end of the frame opening (39) of the second telescoping member (12) in an axially non-displaceable manner.

9. The braking device in accordance with one of the preceding claims, **characterized in that** the second telescoping member (12) is rotatably seated on an angle-and U-shaped bearing element (7) fixed on the frame, which has at least two oblique bores (15, 16) for fastening elements at the at least one angle corner.

10. The braking device in accordance with one of claims 6 to 9, **characterized in that** a support strip (30, 31) projects transversely over the upper end of each wedge surface (26, 27) of the spreading member (20), against which, with the wing (2) or the like in closed position, the upper end of the associated brake shoe (18, 19) is pressed by the loading spring (22).

11. The braking device in accordance with one of claims 6 to 9, **characterized in that** the upper end of the spreading member (20), which projects upward past the brake shoe(s) (18, 19), is embodied as a frame (21), which receives a support member (49) projecting at both sides, against which the upper end of each brake shoe (18, 19) is pressed by the loading spring (22).

12. The braking device in accordance with claim 11, **characterized in that** the support member (49) has a square base body (15), which fills the frame (48) of the spreading member (20), and two pin-like support elements (51, 52), which protrude transversely over the frame plane in opposite directions, are assigned to the upper brake shoe ends and are attached, in particular formed, off-centered in the vertical and horizontal direction, on the base body (50).

13. The braking device in accordance with one of claims 1 to 7, **characterized in that** a revolving member (54) in the form of a circular disk is seated, axially non-displaceable, as well as adjustable and fixable in the direction of rotation, in a bore (53) of the second telescoping member (12) arranged above the spreading member (20), and has two eccentrically attached pins (55, 56) projecting in opposite directions, which engage respectively one transverse slot (57, 58) of a laterally advanced cheek (59, 60), against whose lower end the upper end of the associated brake shoe (18, 19) is pressed by a loading spring (22).

14. The braking device in accordance with one of claims 1 to 7, **characterized in that** two clamping cheeks (62, 63), which can be pressed against the exterior, are maintained at the upper end of the second telescoping member (12) and can be pressed on preferably by means of at least one screw (65), which passes through an opening (64) of the second telescoping member (11) located above the spreading member (20), and that the clamping cheeks (62, 63) can be adjusted and set in a limited manner in the longitudinal direction of the opening (64), or of the second telescoping member (12), wherein the upper end of the respectively associated brake shoe (18, 19) can be pressed against their lower end by means of a loading spring (22).

15. The braking device in accordance with one of claims 1 to 7, **characterized in that** the upper end (67) of the spreading member (20) is embodied in the shape of a frame, and a first toothed section (68, 69) is respectively located at the inside of the longitudinal frame strips, which is engaged by a respective toothed counter-section (70, 71) of two cheeks (72, 73) arranged on both sides of the spreading member (20), which are pressed against the upper end of the associated brake shoe (18, 19) by a loading spring (20), and that a respectively second toothed section (74, 75) is located on the outside of the longitudinal frame strips of the upper end of the spreading member, which each engage a toothed counter-section (76, 77) of the associated longitudinal frame strips (78, 79) of the upper end (21) of the second telescoping member (12).

16. The braking device in accordance with claim 15, **characterized in that** the toothed counter-sections (76, 77) are respectively located on an inner shoulder (80, 81), which engages the frame opening of the spreading member (20) and whose one end extends as far as the upper edge of the cheek (72, 73), and whose other end terminates by half a tooth distance before the lower edge of the cheek.

17. The braking device in accordance with one of the preceding claims, **characterized in that** the brake shoes (18, 19) are made of Kevlar, at least in sections.

18. The braking device in accordance with one of the preceding claims, **characterized in that** the first telescoping member (11) is made at least essentially from a square tube of aluminum, a light alloy, or the like, and the tube is anodized at least on the inside in particular.

19. The braking device in accordance with one of the preceding claims, **characterized in that** the square tube of the first telescoping member (11) is widened over approximately the partial area through which the brake shoes (18, 19) pass during opening into a defined tilted position (Ia).

20. The braking device in accordance with one of the preceding claims, **characterized in that** the upper end of the first telescoping member (11) has a bearing neck (13), which projects transversely in respect to the longitudinal axis and engages a bearing bore of a bearing element (14) fastened on the wing (2), or the like, and is secured against being pulled out (89) by means of a securing element (88).

21. The braking device in accordance with claim 20, **characterized in that** on its free end (86) extending past the bearing bore, the bearing neck (13) has an annular groove (90), which is engaged by the securing element (88) when in its effective position, wherein the securing element (88) rests against an outer face (87) of the bearing element (14).

22. The braking device in accordance with claim 21, **characterized in that** the securing element (88) is a slide, which is seated, secure against being lifted out, on the bearing element (14), and has a frame-like partial area (92), through which the bearing neck end (86) can be pushed in the mounted position, and whose one, preferably lower, transverse strip (93) engages the annular groove (90) of the bearing neck (13) in the secured position.

23. The braking device in accordance with claim 22, **characterized in that** a leaf spring (94), whose free end is supported on the bearing element (14), is attached, in particular formed, on the end of the securing element (88) facing away from the frame-like partial area (92).

24. The braking device in accordance with claim 23, **characterized in that** the leaf spring (94) forms an angle of less than 90°, in particular approximately 75°, with the plane of the slide (92), and the free end of the leaf spring (94) is supported on the top of the bearing element (14).

25. The braking device in particular in accordance with one of the preceding claims, **characterized in that** the second telescoping member (12) is rotatably seated on an angle- and U-shaped bearing element (7) fixed on the frame, which has at least two oblique bores (15, 16) for fastening elements at the at least one angle corner.

## Revendications

1. Dispositif de freinage avec un frein (9) et deux éléments télescopiques (11, 12), pour un élément bidimensionnel basculant autour d'un axe horizontal inférieur (3), par exemple un vantail de lucarne (2), qui, sur au moins un bord latéral vertical, est supporté sur un montant (1), châssis ou similaire, au-dessus de l'axe de basculement (3) par un bras télescopique (5) pivotant dans un plan vertical, le frein (9) étant monté entre les deux éléments télescopiques (11, 12) et étant essentiellement constitué d'au moins deux mâchoires de frein, en particulier une paire de mâchoires de frein (18, 19), mobiles en translation dans le premier élément télescopique (11) de forme tubulaire et aptes à être mises en contact avec l'intérieur du tube, ainsi qu'un élément d'écartement (20) coopérant avec les mâchoires de frein ou s'engageant entre la paire de mâchoires de frein (18, 19), couplé au deuxième élément télescopique (12) et s'effilant en direction de l'articulation (7, 8) de ce dernier, l'élément d'écartement (20) se présentant sous la forme d'un coin plat avec au moins deux faces actives, à chaque face de coin active (26, 27) étant associée une face de coin antagoniste (28, 29) d'inclinaison sensiblement identique d'une mâchoire de frein (18, 19), **caractérisé en ce que** le coin (20) est formé de manière symétrique par rapport à un plan médian longitudinal, **en ce qu'**à chaque face de coin (26, 27) est associée une mâchoire de frein (18, 19), **en ce que** le premier élément télescopique (11) affecte, au moins au niveau du frein (9), la forme d'un tube de section rectangulaire, et **en ce que** les mâchoires de frein (18, 19) coopèrent par leurs faces de freinage avec les faces latérales larges de l'élément télescopique (11).

2. Dispositif de freinage selon la revendication 1, **caractérisé en ce que** le premier élément télescopique tubulaire (11) présente, au niveau de son extrémité inférieure lorsque le vantail est fermé, au moins une butée interne (82, 83) et **en ce que** le second élément télescopique (12) présente, à proximité du frein (9), une butée externe (84, 85) coopérant avec ladite butée interne.

3. Dispositif de freinage selon la revendication 1 ou 2, **caractérisé en ce que** le premier élément télescopique tubulaire est relié pivotant (13) à la partie supérieure du vantail (2) ou similaire, et **en ce que** le second élément télescopique (12) en forme de tige, qui s'insère par le bas dans le premier élément télescopique (lorsque le vantail est fermé), est monté articulé en (8) sur le montant (1).

4. Dispositif de freinage selon l'une des revendications précédentes, **caractérisé en ce que** l'extrémité côté frein du second élément télescopique (12) affecte la forme d'un crochet en C ou d'un cadre fermé (21), dans lequel se trouvent toutes les mâchoires de frein (18, 19), l'élément d'écartement (20) et un ressort de charge (22).

5. Dispositif de freinage selon la revendication 4, **caractérisé en ce que** le ressort de charge (22), qui se présente, de préférence, sous la forme d'un ressort cylindrique de compression, prend appui, par son extrémité inférieure, sur l'extrémité inférieure du cadre (21) et, par son extrémité supérieure, sur l'extrémité inférieure de toutes les mâchoires de frein (18, 19).

6. Dispositif de freinage selon la revendication 5, **caractérisé en ce que** l'extrémité inférieure du ressort est emboîtée sur un ergot de centrage (25) que présente l'extrémité inférieure du cadre (21).

7. Dispositif de freinage selon la revendication 5 ou 6, **caractérisé en ce que** toutes les mâchoires de frein (18, 19) forment conjointement un logement de centrage (24) inférieur pour l'extrémité supérieure du ressort.

8. Dispositif de freinage selon l'une des revendications précédentes, **caractérisé en ce que** l'élément d'écartement (20) présente, sur ses faces latérales de préférence parallèles (33, 34), deux ergots d'ancrage (35, 36) en saillie vers deux côtés opposés, qui s'engagent chacun immobiles en translation axiale dans un élargissement (37, 38) de dimensions correspondantes que présente l'extrémité supérieure de l'ouverture de cadre (39) du second élément télescopique (12).

9. Dispositif de freinage selon l'une des revendications précédentes, **caractérisé en ce que** le second élément télescopique (12) est monté mobile en rotation (8) sur un élément d'articulation (7) de forme angulaire et en U situé côté montant, qui présente sur son ou chacun de ses coins angulaires au moins deux perçages obliques (15, 16) destinés à recevoir des éléments de fixation.

10. Dispositif de freinage selon l'une des revendications 6 à 9, **caractérisé en ce qu'**au-dessus de l'extrémité supérieure de chaque face de coin (26, 27) de l'élément d'écartement (20) dépasse transversalement une baguette d'appui (30, 31), contre laquelle l'extrémité supérieure de la mâchoire de frein associée (18, 19) est pressée par le ressort de charge (22) lorsque le vantail (2) est fermé ou similaire.

11. Dispositif de freinage selon l'une des revendications 6 à 9, **caractérisé en ce que** l'extrémité supérieure de l'élément d'écartement (20) qui dépasse par le haut la ou les mâchoires de frein (18, 19) se présente sous la forme d'un cadre (21), qui reçoit un élément d'appui (49) en saillie de part et d'autre et contre lequel l'extrémité supérieure de chaque mâchoire de frein (18, 19) est plaquée par le ressort de charge (22).

12. Dispositif de freinage selon la revendication 11, **caractérisé en ce que** l'élément d'appui (49) présente un corps de base (50) carré remplissant le cadre (48) de l'élément d'écartement (20) et deux éléments d'appui (51, 52) en forme de tétons, associés aux extrémités supérieures des mâchoires de frein et dépassant transversalement de part et d'autre du plan du cadre, lesdits éléments d'appui étant rapportés, en particulier par formage, sur le corps de base (50) de manière excentrée dans les directions verticale et horizontale.

13. Dispositif de freinage selon l'une des revendications 1 à 7, **caractérisé en ce que** dans un alésage (53) du second élément télescopique (12) pratiqué au-dessus de l'élément d'écartement (20) est logé immobile axialement et réglable et verrouillable en rotation un élément rotatif en forme de disque circulaire (54) présentant deux tétons (55, 56) rapportés de manière excentrée et dépassant dans deux sens opposés, qui s'engagent chacun dans une fente transversale (57, 58) d'une mâchoire (59, 60) placée devant vue latéralement, à l'extrémité inférieure de laquelle l'extrémité supérieure de la mâchoire de frein associée (18, 19) est plaquée par le ressort de charge (22).

14. Dispositif de freinage selon l'une des revendications 1 à 7, **caractérisé en ce qu'**à l'extrémité supérieure du second élément télescopique (12) sont maintenues deux mâchoires de serrage (62, 63) aptes à être serrées depuis l'extérieur, qui peuvent être serrées de préférence au moyen d'une vis (65) traversant un orifice (64) situé dans le second élément télescopique (11) au-dessus de l'élément d'écartement (20), et **en ce que** les mâchoires de serrage (62, 63) sont mobiles et réglables de manière limitée dans le sens longitudinal de l'orifice (64) ou du second élément télescopique (12), l'extrémité supérieure de la mâchoire de frein (18, 19) associée pouvant être pressée par un ressort de charge (22) contre l'extrémité inférieure desdites mâchoires de serrage.

15. Dispositif de freinage selon l'une des revendications 1 à 7, **caractérisé en ce que** l'extrémité supérieure (67) de l'élément d'écartement (20) se présente sous la forme d'un cadre et **en ce que** la face interne de chaque élément longitudinal de cadre présente une première denture (68, 69), dans laquelle s'engagent respectivement les dentures antagonistes (70, 71) de deux mâchoires (72, 73) agencées de part et d'autre de l'élément d'écartement (20), qui sont pressées par un ressort de charge (22) contre l'extrémité supérieure de la mâchoire de frein (18, 19) associée, et **en ce que** sur la face externe de chaque élément longitudinal de cadre de l'extrémité supérieure de l'élément d'écartement se trouve une deuxième denture (74, 75), qui s'engage dans une denture antagoniste (76, 77) de l'élément longitudinal de cadre (78, 79) associé de l'extrémité supérieure (21) du second élément télescopique (12).

16. Dispositif de freinage selon la revendication 15, **caractérisé en ce que** les dentures antagonistes (76, 77) sont pratiquées respectivement au niveau d'un ressaut (80, 81) interne s'engageant dans l'ouverture de cadre de l'élément d'écartement (20), ressaut dont une extrémité s'étend jusqu'à l'arête supérieure de la mâchoire (72, 73) et dont l'autre extrémité se termine une demi-dent avant l'arête inférieure de la mâchoire.

17. Dispositif de freinage selon l'une des revendications précédentes, **caractérisé en ce que** les mâchoires de frein (18, 19) sont fabriquées au moins partiellement en Kevlar.

18. Dispositif de freinage selon l'une des revendications précédentes, **caractérisé en ce que** le premier élément télescopique (11) se compose au moins essentiellement d'un tube de section carrée en aluminium, alliage léger ou similaire, et **en ce que** ce tube est en particulier au moins intérieurement anodisé.

19. Dispositif de freinage selon l'une des revendications précédentes, **caractérisé en ce que** le tube carré du premier élément télescopique (11) est élargi sensiblement sur la partie parcourue par les mâchoires de frein (18, 19) lors de l'ouverture jusque dans une position de basculement définie (Ia).

20. Dispositif de freinage selon l'une des revendications précédentes, **caractérisé en ce que** l'extrémité supérieure du premier élément télescopique (11) présente un tourillon (13) en saillie transversalement par rapport à l'axe longitudinal, tourillon qui s'engage dans l'alésage d'un élément d'articulation (14) fixé au vantail (2) ou similaire, et est fixé inamovible (89) au moyen d'un élément de verrouillage (88).

21. Dispositif de freinage selon la revendication 20, **caractérisé en ce que** le tourillon (13) présente, sur son extrémité libre (86) dépassant de l'alésage d'articulation, une gorge (90), dans laquelle l'élément de verrouillage (88) s'engage en position active, l'élément de verrouillage (88) étant en contact avec une face externe (87) de l'élément d'articulation (14).

22. Dispositif de freinage selon la revendication 21, **caractérisé en ce que** l'élément de verrouillage (88) est un coulisseau monté inamovible contre l'élément d'articulation (14), avec une partie (92) de type cadre, à travers laquelle l'extrémité du tourillon (86) peut être enfichée en position de montage et dont un élément transversal (93), de préférence inférieur, s'engage, en position de verrouillage, dans la gorge (90) du tourillon (13).

23. Dispositif de freinage selon la revendication 22, **caractérisé en ce qu'**à l'extrémité de l'élément de verrouillage (88) située à l'opposé de la partie de type cadre (92) est rapportée, en particulier par moulage, un ressort à lame (94), qui prend appui, par son extrémité libre, sur l'élément d'articulation (14).

24. Dispositif de freinage selon la revendication 23, **caractérisé en ce que** le ressort à lame (94) forme avec le plan du coulisseau (92) un angle inférieur à 90°, en particulier égal à environ 75°, et **en ce que** l'extrémité libre du ressort à lame (94) prend appui, à son extrémité supérieure, sur l'élément d'articulation (14).

25. Dispositif de freinage notamment selon l'une des revendications précédentes, **caractérisé en ce que** le second élément télescopique (12) est monté rotatif (8) sur un élément d'articulation (7) de forme angulaire et en U côté montant, qui présente, sur son ou chacun de ses coins angulaires au moins deux perçages obliques (15, 16) destinés à recevoir des éléments de fixation.
